# EUROPÄISCHE PATENTSCHRIFT

(11) **EP 1 850 111 B1**
(45) Veröffentlichungstag und Bekanntmachung des Hinweises auf die Patenterteilung: **10.09.2014**
(21) Anmeldenummer: 06113030.8
(22) Anmeldetag: 25.04.2006
(51) Int. Cl.: G01N 5/04

(54) **Messgerät zur gravimetrischen Feuchtigkeitsbestimmung**
Measuring device for gravimetric moisture determination
Appareil de mesure destiné à la détermination gravimétrique de l'humidité

(43) Veröffentlichungstag der Anmeldung: 31.10.2007
(73) Patentinhaber: Mettler-Toledo AG, 8606 Greifensee (CH)
(72) Erfinder: Lüchinger, Paul, 8610, Uster (CH)

(56) Entgegenhaltungen:
- EP-A- 0 344 465
- EP-A- 1 148 329
- EP-A1- 1 004 859
- FR-A- 2 606 510
- GB-A- 2 202 054
- US-A- 5 801 337

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang gemessen. Durch die umfangreichen Arbeitsabläufe, die mit dieser Methode verbunden sind, ist diese sehr teuer und anfällig für Fehler.

Gegebenenfalls kann der Gewichtsverlust auch während des Trocknungsvorganges gemessen werden. Dabei nimmt bei einer bekannten Probe in Abhängigkeit der Temperatur, der Trocknungszeit und den Prüfraumbedingungen deren Gewichtswert ab, welcher einer Gewicht- Zeit- Kurve folgt, die sich asymptotisch dem Trockengewicht der Probe annähert. Die Kurve wird für die jeweilige Probe durch Vergleichsversuche ermittelt und kann in einer Näherungsformel mathematisch ausgedrückt werden. Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Wie bereits eingangs erwähnt, verändert sich das Gewicht einer Probe im Wesentlichen in Abhängigkeit von der Temperatur, der Trocknungszeit und den Prüfraumbedingungen. Vor allem die hohen Anforderungen an den Prüfraum beschränken die auf dem Markt erhältlichen Geräte in ihrer Genauigkeit.

Als Prüfraum wird ein durch das Gehäuse des Messgerätes umschlossener, zwecks Einführung beziehungsweise Entfernung einer Probe öffnenbarer Raum bezeichnet. Im Inneren des Prüfraums sind zudem eine Probeaufnahme und ein Mittel zur Erwärmung der Probe angeordnet. Die Probeaufnahme ist mit einem gravimetrischen Messgerät verbunden.

Üblicherweise wird eine dünne Schicht der Probe auf eine ebene Probeaufnahme, beispielsweise eine Probeschale aufgebracht. Die Schale wird im Messgerät zur gravimetrischen Feuchtigkeitsbestimmung in ihrer flächigen Ausdehnung vorzugsweise horizontal und parallel zur flächigen Ausdehnung des Mittels zur Erwärmung der Probe angeordnet, um eine gleichmässige Erwärmung der Probe zu ermöglichen. Als Strahlungsquelle werden verschiedene Strahlungsquellen wie Heizstrahler, Mikrowellengeneratoren, Halogen- und Quarzlampen verwendet.

Damit der Trocknungsvorgang sichergestellt werden kann, müssen die während des Messvorganges aus der Probe entweichenden Dämpfe aus dem Prüfraum entfernt werden können. Üblicherweise werden deshalb Entlüftungsöffnungen im Gehäuse des Messgerätes zwischen dem Prüfraum und der Messgeräte- Umgebung angeordnet. Die Entlüftungsöffnungen, welche im unteren Teil des Prüfraumes angeordnet sind, dienen der Zufuhr relativ trockener, kühler Luft. Diese wird im Prüfraum durch die Strahlungsquelle erwärmt, steigt deshalb im Prüfraum auf und kann im erwärmten Zustand die Feuchtigkeit der Probe aufnehmen. Die mit Feuchtigkeit angereicherte warme Luft verlässt den Prüfraum über die im oberen Teil des Prüfraumes angeordneten Entlüftungsöffnungen.

Ein Messgerät zur gravimetrischen Feuchtigkeitsbestimmung von Frischbeton ist aus der europäischen Patentschrift EP 1148 329 A1 bekannt. Dieses Messgerät weist ein Gehäuse zur Aufnahme eines Probegefässes mit einer Probe des Frischbetons und Mittel zum Erhitzen der Probe mittels Mikrowellen auf. Mit einer im Gehäuse eingebauten Waage kann die Gewichtsabnahme der Probe während der Verdampfung des in ihr enthaltenen Wassers gemessen werden. Ein Rechner berechnet den Wassergehalt der Probe. Dieses Messgerät wird meistens im Freien eingesetzt und es kann Proben von bis zu 40 kg Frischbeton aufnehmen.

Zwei weitere Messgeräte zur gravimetrischen Feuchtigkeitsbestimmung von Kohle sind in der britischen Patentanmeldung GB 2 202 054 A und der Europäischen Patentanmeldung EP 0 344 465 A2 offenbart.

GB 2 202 054 A offenbart ein Messgerät mit einem Probengefäss zur Aufnahme einer Probe, einer Waage, einer Mikrowellenerzeuger zur Heizung der Probe. Mit Hilfe der Signale der Waage kann der Feuchtegehalt der Kohle bestimmt werden. Des Weiteren ist in der Probe ein Temperatursensor und in einer Abluftpassage ein Konzentrationsfühler angebracht. Mit Hilfe der gemessenen Temperatur und/oder der gemessenen Konzentration kann die Heizung reguliert werden. Auf diese Weise kann eine durch Überhitzen verursachte Zersetzung der Probe verhindert werden.

EP 0 344 465 A2 offenbart ebenfalls ein Messgerät mit einem Probengefäss zur Aufnahme einer Probe, einer Waage, einem Mikrowellenerzeuger und einem Rechner zur Berechnung des Feuchtegehalts der Probe. Des Weiteren weist das Messgerät einen Heisslufterzeuger zum Aufheizen der Probe bei einer niedrigen Temperatur und eine Zirkulation von trockener Luft zum Entfernen der feuchten Luft auf.

Da die in GB 2 202 054 A EP 0 344 465 A2 offenbarten Messgeräte normalerweise für die Trocknung grösserer Mengen von Kohle verwendet werden, übt in der Regel die Luftströmung um die Probe keinen wesentlichen Einfluss auf das Waagensignal aus.

Ein weiteres Messgerät zur gravimetrischen Feuchtigkeitsbestimmung der genannten Gattung ist aus der europäischen Patentschrift EP 1 004 859 B1 bekannt. Dieses Messgerät verfügt oberhalb der Strahlungsquelle über Entlüftungsöffnungen im Gehäuse. Über diese Entlüftungsöffnungen kann die aus der Probe austretende Feuchtigkeit aus dem Prüfraum entweichen. Je nach Probe, deren Feuchtigkeitsgehalt ermittelt werden soll, können weitere flüchtige Substanzen beim Erwärmen aus der Probe ausgetrieben werden, welche beispielsweise starken Eigengeruch haben, toxisch oder ätzend sind. Solche flüchtigen Substanzen können insbesondere durch eine teilweise thermische Zersetzung der Probe entstehen. Ferner kann die Feuchtigkeit nicht nur in der Probe verteiltes Wasser sein, auch flüchtige Substanzen, deren Siedepunkt kleiner ist als der des Wassers, werden während des Messvorganges aus der Probe ausgetrieben. Dazu gehören beispielsweise organische und anorganische Lösungsmittel, in der Probe eingeschlossene oder gelöste Gase, Weichmacher bei der Prüfung von Kunststoffen und dergleichen.

Wie vorangehend erwähnt, steigt die warme Luft von unten nach oben durch den Prüfraum. Ein Teil dieser Luft streift die Probeaufnahme und verursacht dabei eine entgegen der Lastrichtung wirkende Kraft. Da diese Kraft zu einem grossen Teil von der Strömungsgeschwindigkeit der Luft im Prüfraum abhängig ist, die Strömungsgeschwindigkeit sich aber durch die herrschenden Verhältnissen im Prüfraum laufend verändert, kann dieser Fehler im Messergebnis nur schwer kompensiert werden. Auch die Trocknungsleistung verändert sich mit der Strömungsgeschwindigkeit, da die Abfuhr der aus der Probe ausgetretenen Feuchtigkeit den Trocknungsprozess massgeblich beeinflusst.

Die dadurch entstehenden Zeitfehler limitieren die Genauigkeit bei einer Auswertung durch das oben beschriebene Rechenmodell. Alternativ zur Verwendung des Rechenmodells kann das bekannte Verfahren angewendet werden, bei dem möglichst die gesamte Feuchtigkeit ausgetrieben werden muss. Dies erfordert aber eine sehr lange Trocknungszeit, womit das Risiko grösser wird, dass eine thermische Zersetzung oder Oxidation der Probe durch die lange anhaltende Beaufschlagung mit der Wärmestrahlung der Strahlungsquelle erfolgt.

Aus den vorangehend erläuterten Gründen ist eine Absolutwertbestimmung des Feuchtigkeitsgehaltes mit einem Messgerät zur gravimetrischen Feuchtigkeitsbestimmung kaum möglich. Demzufolge wird für die genauere Bestimmung der Feuchtigkeit eines Stoffes immer noch das Karl-Fischer-Titrationsverfahren angewendet. Dieses Verfahren ist sehr arbeitsintensiv, anfällig auf Anwenderfehler und teuer.

Aufgabe der vorliegenden Erfindung ist es daher, im eingangs angeführten Messgerät zur gravimetrischen Feuchtigkeitsbestimmung einen Prüfraum mit verbesserten Prüfbedingungen zu schaffen, welcher eine präzisere Bestimmung des Feuchtigkeitsgehaltes einer Probe ermöglicht.

Diese Aufgabe wird dadurch gelöst, dass ein Messgerät zur gravimetrischen Feuchtigkeitsbestimmung ein Gehäuse, einen im Gehäuse angeordneten Prüfraum und eine im Gehäuse eingebaute Wägevorrichtung aufweist. Die Wägevorrichtung beinhaltet eine Probeaufnahme, welche in Messstellung innerhalb des Prüfraumes angeordnet ist. Des Weiteren ist im Prüfraum eine Strahlungsquelle angeordnet, welche der Erwärmung einer auf der Probeaufnahme aufgelegten Probe während eines Messvorganges dient. Um im Prüfraum stabilere Strömungsbedingungen zu erreichen, ist an^{f} den Prüfraum anschliessend eine Absaugvorrichtung angeordnet, mittels welcher die während des Messvorganges aus der Probe austretende Feuchtigkeit und flüchtigen Substanzen aus dem Prüfraum entfernbar sind. Des Weiteren sind die Wägevorrichtung und der Prüfraum nebeneinander im Gehäuse angeordnet , wobei mindestens eine, vorzugsweise der Wägevorrichtung zugewandte Wand des Prüfraumes mindestens eine Durchführung aufweist, durch die ein Verbindungsglied hindurchreicht, mit welchem die Wägevorrichtung mit der im Prüfraum angeordneten Probeaufnahme verbindbar ist.

Der Begriff Messstellung bedeutet, dass die Elemente des Messgerätes derart zueinander angeordnet sind, dass eine Messung durchgeführt werden kann. Konkret bedeutet dies, dass die Probeaufnahme im Prüfraum in unmittelbarer Nähe der Strahlungsquelle angeordnet ist, und dass verschliessbare Beschickungsöffnungen des Prüfraums geschlossen sind, so dass die im Prüfraum herrschenden Strömungsverhältnisse von Aussen nicht beeinflusst werden. Mit Probeaufnahme wird im Wesentlichen der Lastaufnehmer, beziehungsweise die Waagschale eines gravimetrischen Messgerätes bezeichnet.

Die Absaugvorrichtung erzeugt im Prüfraum einen leichten Unterdruck, wodurch ein gasförmiges Medium ausserhalb des Messgerätes angesaugt wird, welches beispielsweise über Durchbrüche in den Wänden des Prüfraums in den Prüfraum gelangt. Das gasförmige Medium wird in geeigneter Weise durch den Prüfraum geleitet, dort nimmt es die Feuchtigkeit auf und wird anschliessend über die Absaugvorrichtung aus dem Prüfraum entfernt. Die leichte Druckabsenkung im Prüfraum fördert zusätzlich das Austreten der Feuchtigkeit aus der Probe. Selbstverständlich kann das gasförmige Medium auch mit Überdruck durch den Prüfraum geleitet werden.

Die Absaugvorrichtung ist nicht auf Systeme, beispielsweise eine Ableitungsöffnung mit einem Ventilator oder einer Vakuumpumpe limitiert. Sofern von aussen unter Überdruck über eine Gaszufuhrvorrichtung ein gasförmiges Medium in den Prüfraum eingeleitet wird, stellt diese Gaszufuhrvorrichtung und die Ableitungsöffnung zur Entfernung der Gase aus dem Prüfraum ebenfalls eine Absaugvorrichtung dar.

Idealerweise sind im Gehäuse des Messgerätes die Wägevorrichtung und der Prüfraum nebeneinander angeordnet, wobei mindestens eine, vorzugsweise der Wägevorrichtung zugewandte Wand des Prüfraumes mindestens eine Durchführung aufweist. Durch diese Durchführung reicht ein Verbindungsglied hindurch, mit welcher die Wägevorrichtung mit der im Prüfraum angeordneten Probeaufnahme verbindbar ist.

In einer Ausgestaltung des Messgerätes ist die Strahlungsquelle im Prüfraum in Bezug auf die Lastrichtung oberhalb der Probeaufnahme angeordnet. Dadurch wird die Probe von oben erwärmt.

Als Strahlungsquelle kann aus einer Vielzahl von Möglichkeiten wie einer Heizplatte, einer Heizfolie, einer Halogen- Wärmelampe, einer Quarz- Wärmelampe, einem Heizstrahler einer Heizschlange, einer monochromatische Lichtquelle, einem Peltier-Element oder einem Mikrowellengenerator ausgewählt werden.

In einer weiteren Ausgestaltung des Messgerätes beinhaltet die Strahlungsquelle eine erste Strahlungsquelle und eine zweite Strahlungsquelle, wobei die Probeaufnahme zwischen der ersten Strahlungsquelle und der zweiten Strahlungsquelle angeordnet ist. Diese Anordnung weist gegenüber dem bekannten Stand der Technik erhebliche Vorteile auf. Durch die Anordnung zweier Strahlungsquellen unterhalb und oberhalb der Probeaufnahme ist eine wesentlich bessere und beeinflussbare Wärmeverteilung erreichbar. Die Probe wird gleichmässiger und während einer kürzeren Zeit erwärmt. Die Intensität der Strahlung beider Strahlungsquellen kann der Probe und der verwendeten Probeaufnahme entsprechend angepasst werden. Durch die Wahl eines geeigneten Temperaturprofils über die Probendicke kann die Austreibung der Feuchtigkeit zusätzlich beschleunigt werden, ohne dass die Probe zersetzt wird oder oxidiert. Über eine Steuer- und Regelelektronik kann die Strahlungsquelle gesteuert, beziehungsweise geregelt werden. Eine Regelung erfordert die Erfassung der Temperatur der Probe und/oder der Innentemperatur des Prüfraumes mit geeigneten Mitteln, beispielsweise einem im Prüfraum angeordneten Temperatursensor. Zur genaueren Erfassung der Prüfbedingungen kann zusätzlich im Prüfraum auch ein Feuchtigkeitssensor angeordnet sein.

Bei der Auftragung der Probe auf die Probeaufnahme entstehen zwangsläufig lokal unterschiedliche Schichtstärken. Die Unterschiede sind abhängig von der Probe und der Auftragungsmethode. Der Einfluss auf das Messergebnis infolge der unregelmässigen Verteilung der Probe auf der Probeaufnahme sinkt durch die besser beeinflussbare Wärmeverteilung in der Probe.

Sofern die Strömungsgeschwindigkeit des gasförmigen Mediums nicht zu hoch ist, können bei geeigneter Ausgestaltung des Prüfraumes die Turbulenzen im gasförmigen Medium und dadurch deren Einfluss auf die Messwerte minimiert werden. Vorzugsweise wird deshalb die Absaugvorrichtung bezogen auf die Lastrichtung oberhalb der Probeaufnahme und der Strahlungsquelle angeordnet. Dadurch verursacht die Absaugvorrichtung keine zusätzlichen Turbulenzen des gasförmigen Mediums im Prüfraum.

Damit die austretende Feuchtigkeit nicht zwischen der Probe und der Strahlungsquelle in einem lokal verharrenden und mit Feuchtigkeit gesättigten Gaspolster gefangen ist und dadurch den Austritt der Feuchtigkeit hemmt, ist die Strahlungsquelle vorzugsweise mit Öffnungen zur Durchführung von Gasen versehen.

Die Kalibriervorrichtung kann ein Kalibriergewicht oder mehrere Kalibriergewichte aufweisen. In einer besonders bevorzugten Ausführung liegt der Massenschwerpunkt des einen oder der mehreren Kalibriergewichte während eines Kalibrierungsvorganges auf oder nahe einer, in Lastrichtung verlaufenden Schwerpunktachse der Probeaufnahme und/oder der Probe. Dadurch können Eckenlastfehler im durch den Kalibriervorgang ermittelten Korrekturfaktor vermieden werden.

Die Wägevorrichtung des Messgerätes beinhaltet eine Wägezelle, welche einen Lastaufnahmebereich und einen mit dem Gehäuse fest verbundenen feststehenden Teil aufweist. Zur einfachen Beschickung beziehungsweise Entnahme der Probe aus dem Prüfraum kann die Probeaufnahme mit dem Lastaufnahmebereich koppelbar, beziehungsweise vom Lastaufnahmebereich entkoppelbar ausgestaltet sein.

Damit die Probeaufnahme vom daran vorbeiströmenden gasförmigen Medium möglichst wenig erfasst wird, kann im Prüfraum zusätzlich ein Innenwindschutz angeordnet sein, der die Probeaufnahme teilweise umgibt.

Obwohl der Prüfraum innerhalb des Gehäuses durch eine Wand ausgebildet und damit nahezu vollständig von der Wägevorrichtung getrennt ist, können Wägeresultate der Wägevorrichtung durch die Emissionen der Strahlungsquellen stark beeinflusst werden. Zur thermischen Isolation wird die Wand des Prüfraumes deshalb vorzugsweise zumindest zwischen dem Prüfraum und der Wägevorrichtung doppelwandig ausgebildet, um das von ausserhalb des Messgerätes angesaugte oder einzubringende gasförmige Medium, vorzugsweise Luft, in der doppelwandigen Wand zu führen. Das gasförmige Medium kann selbstverständlich auch durch Überdruck in das Messgerät eingeleitetet werden. Im Prüfraum beziehungsweise in der doppelwandigen Wand kann zusätzlich noch ein Mittel zur Eliminierung elektrostatischer Ladungen, beispielsweise ein lonisator angeordnet sein, um statische Ladungen im Prüfraum zu eliminieren.

Vorzugsweise ist das gasförmige Medium chemisch stabil und reaktionsträge gegenüber der Probe und den Materialien des Prüfraums. Solche gasförmigen Medien können beispielsweise Schutzgase wie Stickstoff und Edelgase wie Argon sein.

In speziellen Fällen kann aber auch ein mit den austretenden dampf- oder gasförmigen Substanzen reagierendes gasförmiges Medium verwendet werden, um einer Wiederaufnahme der Substanzen durch die Probe entgegenzuwirken. Im Falle von Wasserdampf könnten beispielsweise verschiedene Halogene eingesetzt werden.

Für besondere Anwendungen ist es von Vorteil, wenn das gasförmige Medium einen vordefinierten Feuchtigkeitsgehalt aufweist. Dadurch kann die Reproduzierbarkeit von Vergleichsmessungen verbessert werden.

Sowohl eine aktiv verursachte Durchströmung des Prüfraumes mittels einer Absaugvorrichtung als auch eine durch rein thermische Effekte verursachte Strömung im Prüfraum beeinflusst das Wägeergebnis. Das von unten nach oben aufsteigende gasförmige Medium im Prüfraum greift an der Unterseite der Probeaufnahme an und verringert dadurch den Wägewert der Probe. Der Auftrieb der Probe verringert sich wiederum mit zunehmender Temperatur. Bei der aktiv verursachten Strömung ist die Strömungsgeschwindigkeit im Bereich der Probeaufnahme bekannt oder kann mittels einer Messung ohne Probe ermittelt werden. Selbstverständlich können solche Effekte auch elektronisch kompensiert werden, indem vor der eigentlichen Messung ein Kompensationswert mit einer Dummy-Probe ermittelt wird.

Wie vorangehend beschrieben, können beim Trocknungsvorgang weitere flüchtige Substanzen aus der Probe ausgetrieben werden, welche beispielsweise starken Eigengeruch haben, toxisch oder ätzend sind. Vorzugsweise verfügt daher die Absaugvorrichtung des Messgerätes über einen Kondensator, in welchem die aus der Probe ausgetretene Feuchtigkeit und/oder flüchtige Substanz aus dem gasförmigen Medium nach verlassen des Prüfraumes mittels Kühlung auskondensiert wird. Die Absaugvorrichtung kann an Stelle des Kondensators oder zusätzlich zum Kondensator einen chemischen oder mechanischen Filter aufweisen. In einer besonders bevorzugten Ausführung weist der Filter ein Adsorptionsmittel, beispielsweise Aktivkohle auf.

Mit den oben beschriebenen Ausführungen des Messgerätes können eine Vielzahl von verschiedenen Verfahren durchgeführt werden. Eines dieser Verfahren zur Feuchtigkeitsbestimmung einer Probe durch Messung des Gewichtsverlustes während einer vorbestimmten Prüfdauer und einem festgelegten Temperaturprofil weist im Wesentlichen die folgenden Schritte auf:
- einstellen des Prüfraumes auf eine vorgegebene Temperatur mittels mindestens einer der Strahlungsquellen und/oder der Absaugvorrichtung,
- einbringen der Probe in den Prüfraum,
- ermitteln des Probengewichts in vordefinierten Messintervallen und/oder kontinuierliches Erfassen einer Gewichtsabnahme über die gesamte Prüfdauer,
- Auswertung des Messergebnisses und/oder Übermittlung des Messergebnisses an eine Anzeigeeinheit.

Durch die Konditionierung des Prüfraumes vor Beginn der eigentlichen Messung können gleich bleibende Prüfraumbedingungen erzeugt werden, was die Reproduzierbarkeit der Messresultate verbessert.

Sofern das Messgerät über eine Aufbereitungsvorrichtung für das gasförmige Medium verfügt, ermöglicht dieses Messgerät die Durchführung eines weiteren Verfahrens. Dieses Verfahren dient der Bestimmung der Feuchtigkeitsaffinität einer Probe durch Messung der Gewichtszunahme während einer vorbestimmten Prüfdauer und einem festgelegten Temperaturprofil. Das Verfahren weist im wesentlichen folgenden Schritte auf:
- einbringen der Probe in den Prüfraum,
- konditionieren der Probe auf eine vorbestimmte Feuchtigkeit,
- einstellen des Prüfraumes auf eine vorgegebene Temperatur mittels mindestens einer der Strahlungsquellen und/oder der Absaugvorrichtung,
- einbringen eines gasförmigen Mediums mit einem bekannten Feuchtigkeitsgehalt bei vordefiniertem Volumenstrom und vordefiniertem Temperaturprofil während der Prüfdauer,
- ermitteln des Probengewichts in vordefinierten Messintervallen und/oder kontinuierliches Erfassen einer Gewichtszunahme über die gesamte Prüfdauer,
- Auswertung des Messergebnisses und/oder Übermittlung des Messergebnisses an eine Anzeigeeinheit.

Wie vorangehend beschrieben, können Strömungseinflüsse das Messergebnis wesentlich beeinflussen. Um diese Effekte weitgehend auszuschliessen, bietet sich ein Verfahren an, bei dem die Erfassung des Probengewichtes in vordefinierten Messintervallen während der Prüfdauer erfolgt, wobei vor jedem Messintervall die Absaugvorrichtung ausgeschaltet und nach jedem Messintervall die Absaugvorrichtung wieder eingeschaltet wird.

In den vorangehenden Verfahren wurde jeweils der Prüfraum konditioniert. Während dieser Konditionierungsphase kann gegebenenfalls auch der Auftriebs- und Strömungsfehlerabgleich vorgenommen werden.

Ein erstes Verfahren zur elektronischen Korrektur eines Auftriebs- oder Strömungsfehlers in den erfassten Messwerten, beinhaltet im Wesentlichen die folgenden Schritte:
a. einbringen eines Referenzkörpers in den Proberaum,
b. konditionieren des Prüfraumes auf eine vorgegebene Temperatur mittels mindestens einer der Strahlungsquellen und/oder der Absaugvorrichtung,
c. ermitteln des Gewichtsgrundwertes des Referenzkörpers,
d. einschalten der Absaugvorrichtung,
e. ermitteln der Korrekturgewichtswerte des Referenzkörpers in vorbestimmten Messintervallen und/oder kontinuierliches Erfassen der Gewichtsveränderung über die gesamte Prüfdauer,
f. bilden der Korrekturwerte oder des Korrekturprofils über die ganze Prüfdauer durch Subtraktion des Gewichtsgrundwertes von den Korrekturgewichtswerten
g. einspeichern dieser Werte oder des Korrekturprofils in ein Speichermodul,
h. Entnahme des Referenzkörpers,
i. durchführen der Probenmessungen unter Berücksichtigung der ermittelten Korrekturwerte.

Der Referenzkörper kann eine Dummy-Probeschale sein, aber auch die eigentliche Probeschale, auf welche nach der Erfassung der Korrekturwerte die Probe aufgetragen wird.

Ein zweites Verfahren zur elektronischen Korrektur eines Auftriebs- oder Strömungsfehlers in den erfassten Messwerten, beinhaltet im Wesentlichen die folgenden Schritte:
- ermitteln des Volumenstroms oder Massenstromes des gasförmigen Mediums mittels der Absaugvorrichtung und/oder mindestens eines im Prüfraum angeordneten Sensors,
- errechnen der Korrekturwerte oder des Korrekturprofils über die ganze Prüfdauer aus dem ermittelten Volumenstrom oder Massenstrom,
- einspeichern dieser Werte oder des Korrekturprofils in ein Speichermodul,
- durchführen der Probenmessungen unter Berücksichtigung der ermittelten Korrekturwerte.

Ferner ist es auch möglich, die mit der beschriebenen Messvorrichtung gemessenen Resultate zu verifizieren. Das Verfahren zur Verifizierung der Messwerte beinhaltet im Wesentlichen die folgenden Schritte:
- ermitteln des Volumenstroms des gasförmigen Mediums mittels der Absaugvorrichtung und/oder mindestens eines im Prüfraum angeordneten Sensors über die gesamte Prüfdauer,
- ermitteln und erfassen der konstant gehaltenen oder sich verändernden Feuchtigkeit des in den Prüfraum einströmenden gasförmigen Mediums mit mindestens einem Feuchtesensor über die gesamte Prüfdauer,
- ermitteln und erfassen der sich verändernden Feuchtigkeit des aus dem Prüfraum ausströmenden gasförmigen Mediums mit mindestens einem Feuchtesensor über die gesamte Prüfdauer,
- errechnen der Verifizierungswerte aus dem ermittelten Volumenstrom sowie der Feuchtigkeitsdifferenz zwischen dem einströmenden und dem ausströmenden gasförmigen Medium über die gesamte Prüfdauer.

Diese Verifizierungswerte sind aufgrund der Strömungsverhältnisse und der inhomogenen Feuchtigkeitsverteilung im gasförmigen Medium in der Tendenz ungenauer als die Erfassung des Gewichtsverlustes der Probe. Sie dienen daher im Wesentlichen der Überprüfung der Funktionstüchtigkeit des Messgerätes.

Einzelheiten der erfindungsgemässen Messvorrichtung ergeben sich anhand der Beschreibung der in den Zeichnungen dargestellten Ausführungsbeispiele. Es zeigen:

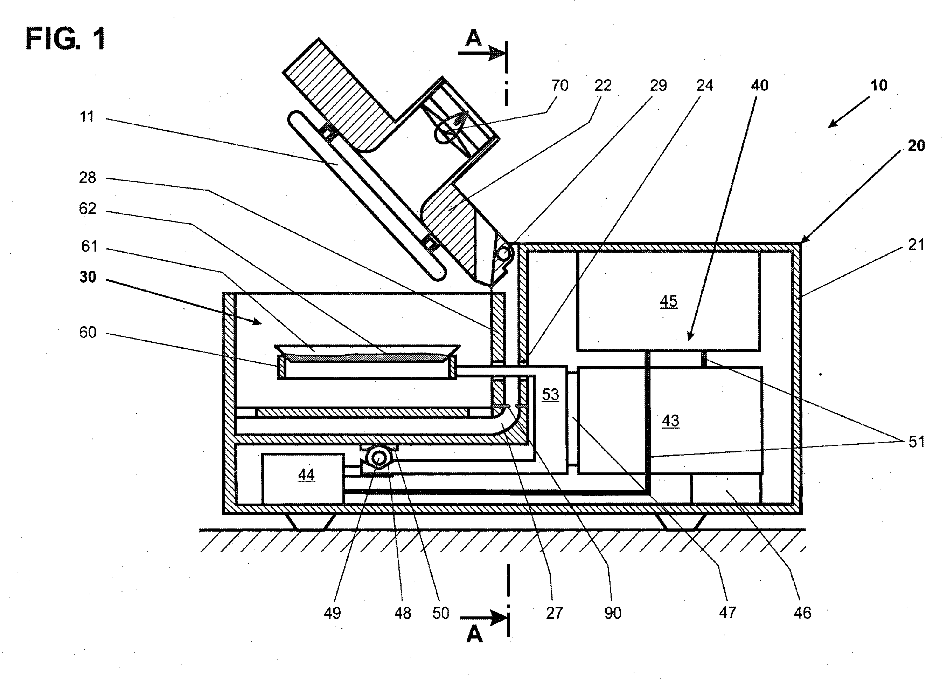

- Fig. 1: die Darstellung einer Messvorrichtung im Schnitt in einer ersten Ausführung mit einem Gehäuse, in welcher der Prüfraum und die Wägevorrichtung nebeneinander angeordnet sind und einem die Strahlungsquelle tragenden Deckel, welcher um eine im Wesentlichen horizontale Schwenkachse am Gehäuse schwenkbar gelagert ist, sowie eine im Deckel integrierte Absaugvorrichtung und einem isolierenden Belüftungskanal welcher zwischen der Wägevorrichtung und dem Prüfraum angeordnet ist;

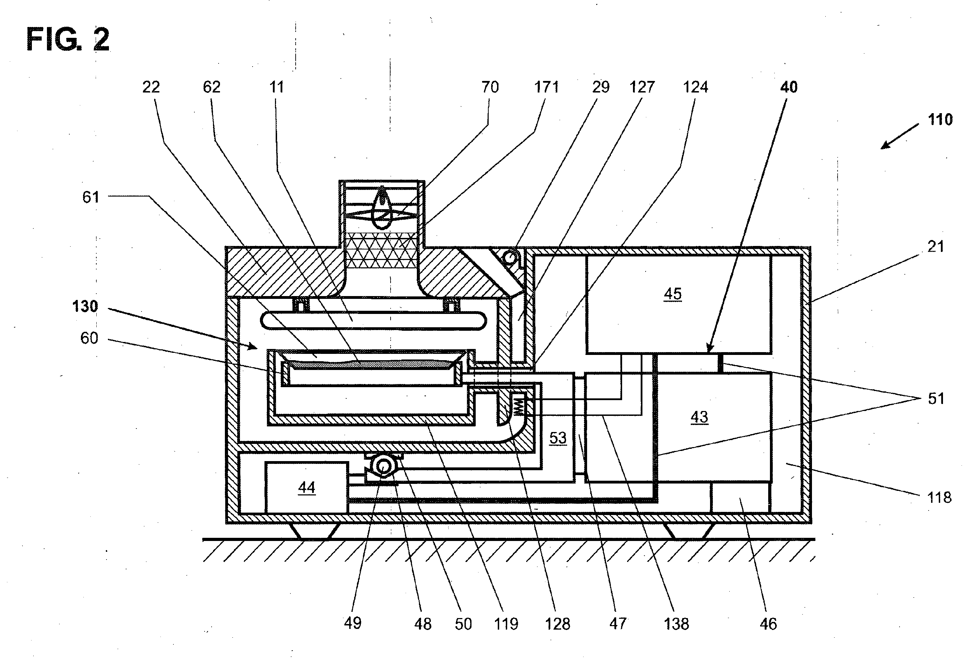

- Fig. 2: die Darstellung einer Messvorrichtung im Schnitt in einer zweiten Ausführung, welche weitgehend der Messvorrichtung von Figur 1 entspricht, jedoch eine Heizvorrichtung im Belüftungskanal und einen Innenwindschutz im Prüfraum aufweist;

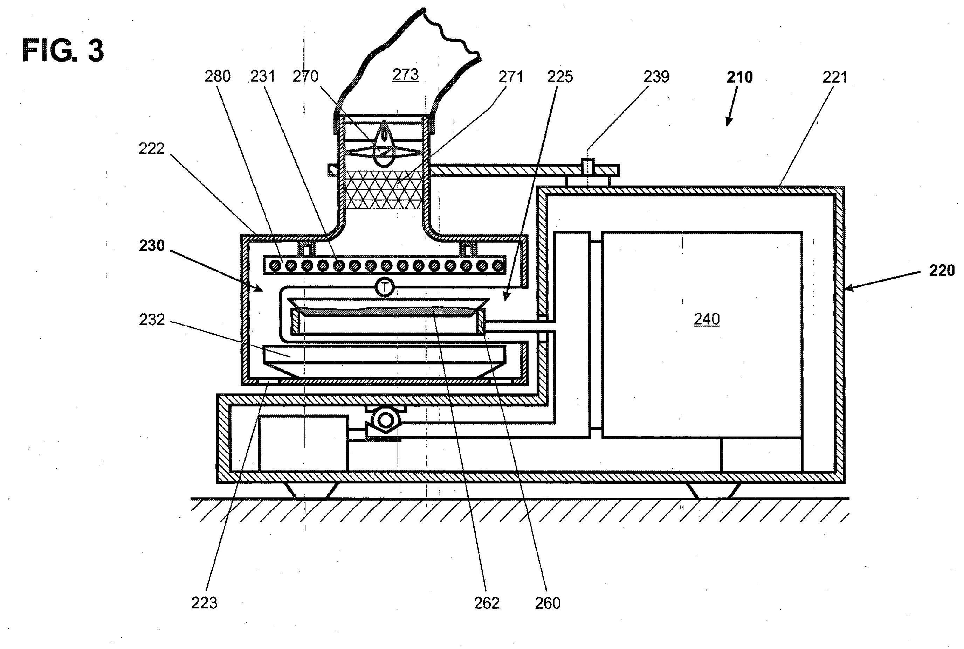

- Fig. 3: die Darstellung einer Messvorrichtung im Schnitt in einer dritten Ausführung mit einer um eine vertikale Schwenkachse verschwenkbaren Einheit aus erster und zweiter Strahlungsquelle, wobei die verschwenkbare Einheit und die Wägevorrichtung nebeneinander angeordnet sind und in der verschwenkbaren Einheit eine Absaugvorrichtung und Luftschlitze integriert sind;

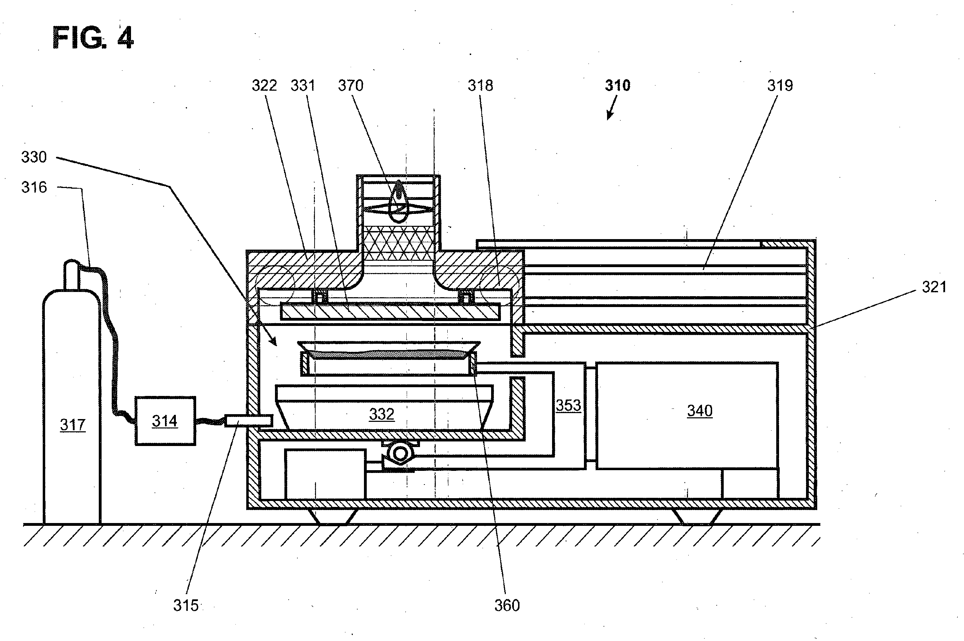

- Fig. 4: die Darstellung einer Messvorrichtung im Schnitt in einer vierten Ausführung mit einem Gehäuse, in welchem der Prüfraum und die Wägevorrichtung nebeneinander angeordnet sind und einem die erste Strahlungsquelle tragenden Deckel mit einer integrierten Absaugvorrichtung, welcher horizontal verschiebbar ausgebildet ist, sowie mit einem Prüfraum mit Gasanschluss.

In der Figur 1 ist eine Messvorrichtung 10 in einer ersten Ausführung im Schnitt dargestellt. Die Messvorrichtung 10 weist ein Gehäuse 20 auf, in welchem ein Prüfraum 30 angeordnet ist. Das Gehäuse 20 ist in einen bewegbaren Gehäuseteil 22 und in einen feststehenden Gehäuseteil 21 unterteilt. Im feststehenden Gehäuseteil 21 sind eine Wägezelle 43, ein Kalibriergewichtauflegemechanismus 44 und mindestens ein Elektronikmodul 45 angeordnet und durch Übertragungsmittel 51 miteinander verbunden. Das Elektronikmodul 45 enthält mindestens ein nicht näher dargestelltes Signalverarbeitungsmodul, gegebenenfalls auch ein Steuerungs- und/oder Regelungsmodul. Die Wägezelle 43 weist mindestens einen feststehenden Bereich 46 und einen Lastaufnahmebereich 47 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen. Der feststehende Bereich 46 ist mit dem feststehenden Gehäuseteil 21 fest verbunden und am Lastaufnahmebereich 47 ist ein Verbindungsglied 53 angeordnet, welches eine Probeaufnahme 60 mit dem Lastaufnahmebereich 47 verbindet. Auf die Probeaufnahme 60 kann wie dargestellt, eine Probeschale 61 mit einer Probe 62 aufgelegt werden. Sofern es die Ausgestaltung der Probeaufnahme 60 erlaubt, kann selbstverständlich die Probe 62 auch direkt auf die Probeaufnahme 60 aufgebracht werden.

Ferner ist am Verbindungsglied 53 eine Kalibriergewichtauflage 48 ausgebildet. Auf diese Kalibriergewichtauflage 48 kann vom Benutzer oder durch die Steuerung der Messvorrichtung 10 ausgelöst, mittels dem Kalibriergewichtauflegemechanismus 44 ein Kalibriergewicht 49 aufgelegt werden, um einen Korrekturwert für das Messsignal in Abhängigkeit des momentanen Betriebszustandes der Messvorrichtung 10 zu ermitteln. Nach der Ermittlung des Korrekturwertes wird das Kalibriergewicht 49 wieder von der Kalibriergewichtauflage 48 entkoppelt und durch den Kalibriergewichtauflegemechanismus 44 bis zum nächsten Kalibriervorgang gegen einen Anschlag 50 gepresst. Um Eckenlastfehler im Korrekturwert zu vermeiden, liegt idealerweise der Massenschwerpunkt des Kalibriergewichts (49) beziehungsweise der gemeinsame Massenschwerpunkt mehrerer Kalibriergewichte (49) nahe der Schwerpunktachse der Probeaufnahme (60) beziehungsweise der Probeschale (61), beziehungsweise der Probe (62). Unter Eckenlastfehler wird die Abweichung im Messwert einer Wägevorrichtung bezeichnet, welche dieselbe Last bei deren exzentrischen Anordnung gegenüber deren zentrischen Anordnung auf der Probeaufnahme (60) verursacht.

Wie in Figur 1 gezeigt wird, ist das bewegbare Gehäuseteil 22 als Deckel ausgestaltet, in welchem eine Strahlungsquelle 11 angeordnet ist. Oberhalb der Strahlungsquelle 11 ist eine Absaugvorrichtung 70 im beweglichen Gehäuseteil 22 integriert. Dieses bewegliche Gehäuseteil 22 ist über ein Scharnier 29 im oberen Bereich des Gehäuses 20 mit dem feststehenden Gehäuseteil 21 verbunden, wobei die Schwenkachse des Scharniers 29 im Wesentlichen horizontal angeordnet ist. Das bewegbare Gehäuseteil 22 bildet den oberen Teil des Prüfraumes 30. Figur 1 zeigt das Messgerät 10 in Beschickungsstellung, das heisst, dass der Deckel des Prüfraums 30 in geöffneter Position dargestellt ist.

Der untere Teil des Prüfraumes 30 ist im feststehenden Gehäuseteil 21 ausgebildet. Das mit der Wägevorrichtung 40 mechanisch verbundene Verbindungsglied 53 ragt ebenfalls in den unteren Teil des Prüfraums 30 hinein, so dass die mit dem Verbindungsglied 53 verbundene Probeaufnahme 60 vollständig im Prüfraum 30 angeordnet ist. Zur thermischen Isolation ist eine Wand 28 des feststehenden Gehäuses 21 zwischen der Wägevorrichtung 40 und dem Prüfraum 30 zumindest teilweise doppelwandig ausgestaltet. Durch die doppelwandige Ausgestaltung der Wand 28 wird ein Belüftungskanal 27 gebildet, durch den ein gasförmiges Medium in den Prüfraum 30 geleitet werden kann. Das während des Messvorganges durchströmende Medium kühlt dabei die Wand 28, so dass die vom Prüfraum 30 ausstrahlende Wärme nicht in den Gehäusebereich der Wägevorrichtung 40 vordringen kann.

Im Belüftungskanal 27 können ferner verschiedene Hilfseinrichtungen angeordnet werden. So kann mittels eines lonisators 90 das gasförmige Medium ionisiert werden, um elektrostatische Ladungen innerhalb des Prüfraumes 30 zu eliminieren. Damit das Verbindungsglied in den Prüfraum hineinragen kann, weist die Wand 28 eine Durchführung 24 auf. Diese kann wie in Figur 2 dargestellt, auch rohrförmig durchgehend geschlossen ausgestaltet sein, so dass kein durch den Belüftungskanal 27 strömendes Medium über die Durchführung 24 in den Proberaum 30 gelangen kann oder auf das Verbindungsglied 53 einwirkt.

In Figur 2 wird eine zweite, im Schnitt dargestellte Ausführungsvariante der erfindungsgemässen Messvorrichtung 110 gezeigt. Die Messvorrichtung 110 selbst entspricht weitestgehend der Messvorrichtung aus Figur 1, wobei für gleiche Merkmale gleiche Bezugszeichen verwendet, und diese Merkmale nicht mehr ausführlich beschrieben werden. In Figur 2 ist im geschlossen dargestellten Prüfraum 130 des Messgerätes 110 ein Innenwindschutz 119 angeordnet, welcher teilweise die Probeaufnahme 60 umfasst. Dadurch können Strömungseinflüsse des gasförmigen Mediums von der Probeaufnahme 60 ferngehalten werden. Wie bereits in der Beschreibung von Figur 1 erwähnt, ist die Durchführung 124 durchgehend rohrförmig, zwischen dem Prüfraum 130 und einem Hohlraum 118 des feststehenden Gehäuseteils 21, in welchem die Wägevorrichtung 40 angeordnet ist, ausgestaltet. Durch diese Durchführung 124 reicht das Verbindungsglied 53 hindurch und verbindet die Probeaufnahme 60 mit dem Lastaufnahmebereich 47 der Wägezelle 43. Durch die rohrförmige Ausbildung der Durchführung 124 im Bereich des Belüftungskanals 127, umströmt das angesaugte gasförmige Medium die Durchführung 124 ohne mit dem Verbindungsglied 53 in Berührung zu kommen. Dadurch gelangt kein gasförmiges Medium direkt über die Durchführung 124 in den Prüfraum 130. Wie dargestellt, hat die rohrförmig ausgestaltete Durchführung 124 zudem die Funktion, den Innenwindschutz 119 mit dem feststehenden Gehäuseteil 21 zu verbinden. Um das gasförmige Medium vor dessen Eintritt in den Prüfraum 130 vorzuheizen, kann im Belüftungskanal 127 eine Belüftungskanal- Strahlungsquelle 138 angeordnet sein.

In Figur 3 wird eine dritte, im Schnitt dargestellte Ausführungsvariante der erfindungsgemässen Messvorrichtung 210 gezeigt. Eine im Gehäuse 220 angeordnete Wägevorrichtung 240 weist im Wesentlichen dieselben Elemente auf, welche vorangehend in der Beschreibung von Figur 1 bezüglich der Wägevorrichtung 40 aufgeführt wurden. Das Gehäuse 220 ist in einen feststehenden Gehäuseteil 221 und in einen bewegbaren Gehäuseteil 222 unterteilt.

Die Wägevorrichtung 240 ist vom feststehenden Gehäuseteil 221 weitgehend umschlossen. Einzig eine mit der Wägevorrichtung 240 verbundene Probeaufnahme 260 ragt aus dem feststehenden Gehäuseteil 221 heraus und in den Bereich des bewegbaren Gehäuseteils 222 hinein, wenn der bewegbare Gehäuseteil 222 sich in Messstellung befindet. Auf diese, hier ringförmig ausgestalteten Probeaufnahme 260 lassen sich verschieden ausgestaltete Behältnisse wie Probeschalen 262, Tiegel und dergleichen mehr auflegen.

Der bewegbare Gehäuseteil 222 bildet die Aussenhülle einer Einheit, welche um eine vertikale Schwenkachse 239 verschwenkbar mit dem feststehenden Gehäuseteil 221 verbunden ist. Ein Prüfraum 230 ist im Innern des bewegbaren Gehäuseteils 222 ausgebildet, wobei bezogen auf die Lastrichtung im oberen Bereich des Prüfraumes 230 eine erste Strahlungsquelle 231 im Wesentlichen parallel zur Probeaufnahme 260 angeordnet ist, um eine möglichst homogene Wärmeverteilung zumindest an der Oberfläche der Probe 262 zu erreichen. Unterhalb der Probeaufnahme 260 ist im Prüfraum 230 eine zweite Strahlungsquelle 232 im Wesentlichen parallel zur Probeaufnahme 260 angeordnet, deren Strahlung von unten auf die Probe 262 einwirkt. Eine parallele Anordnung ist aber nicht zwingend erforderlich. Je nach Probe 262 und der durchzuführenden Messung kann auch eine schräg zur Probeaufnahme 260 angeordnete erste Strahlungsquelle 231 und /oder zweite Strahlungsquelle 232 von Vorteil sein. Durch die zweiseitige Einwirkung der Strahlung von unten und von oben wird eine homogenere Wärmeverteilung in der Probe 262 erreicht. Dadurch treten in der Probe 262 weniger lokale Überhitzungen auf, die dazu führen können, dass sich die Probe 262 an diesen Stellen thermisch zersetzt oder oxidiert. Sofern die Probe 262, beispielsweise ein Kunststoff, einen relativ tiefen Schmelzpunkt aufweist, kann die Oberfläche der Probe 262 bei zu inhomogener Erwärmung anschmelzen und so den Austritt der Feuchtigkeit aus der Probe 262 hemmen. Dies kann bei der Anwendung einer Berechnungsmethode in welcher zeitabhängige Parameter verwendet werden, zu massiven Fehlern im errechneten Ergebnis führen.

Ferner weist der bewegbare Gehäuseteil 222 eine Beschickungsöffnung 225 auf, welche so ausgebildet ist, dass die Probeaufnahme 260 mit aufgelegter Probe 262 beim Verschwenken der Einheit das bewegbare Gehäuseteil 222 nicht berührt. Wie in Figur 3 dargestellt, umgibt in Messstellung der Prüfraum 230 die Probeaufnahme 260, wobei die erste Strahlungsquelle 231 oberhalb der Probeaufnahme 260 und die zweite Strahlungsquelle 232 unterhalb der Probeaufnahme 260 angeordnet ist.

Die erste Strahlungsquelle 231 ist mittels mehrerer Öffnungen 280 rostförmig ausgebildet, so dass sich die aus einer Probe 262 entweichende Feuchtigkeit über diese Öffnungen 280 besser aus der Umgebung der Probe 262 entfernen lässt. Oberhalb der ersten Strahlungsquelle 231 ist im beweglichen Gehäuseteil 221 eine Absaugvorrichtung 270 eingelassen. Diese erzeugt im Prüfraum 230 einen Unterdruck, so dass über Belüftungsöffnungen 223 oder über die Beschickungsöffnung 225 des beweglichen Gehäuseteils 221, beispielsweise die die Messvorrichtung 210 umgebende Luft in den Prüfraum 230 angesaugt wird. Die angesaugte Luft wird im Prüfraum 230 durch die Strahlungsquellen 231, 232 erwärmt, nimmt die aus der Probe 262 entweichende Feuchtigkeit auf und verlässt über die Absaugvorrichtung 270 den Prüfraum 230. Die Durchflussgeschwindigkeit des angesaugten, gasförmigen Mediums, welches die aus der Probe 262 ausgetriebene Feuchtigkeit aufnimmt, kann über die Saugleistung der Absaugvorrichtung 270 gesteuert werden. Zur Behandlung flüchtiger Substanzen welche beispielsweise starken Eigengeruch haben, toxisch oder ätzend sind, kann der Absaugkanal der Absaugvorrichtung 270 zusätzlich mit einem Kondensator und/oder einem Filter 271 ausgerüstet sein. Je nach vorhandener Infrastruktur kann das gasförmige Medium mit der aufgenommenen Feuchtigkeit über einen an die Absaugvorrichtung 270 anschliessenden Schlauch 273 beispielsweise in die Lüftungseinrichtung einer Kapelle eingeleitet werden.

In Figur 4 wird eine vierte, im Schnitt dargestellte Ausführungsvariante der erfindungsgemässen Messvorrichtung 310 gezeigt. Das feststehende Gehäuseteil 321 und die darin angeordneten Elemente wie eine Wägevorrichtung 340, eine Probeaufnahme 360, sowie ein Verbindungsglied 353 entsprechen im Wesentlichen den Elementen, welche vorangehend in der Beschreibung von Figur 1 aufgeführt wurden. Wie das Messgerät 210 von Figur 3, weist das Messgerät 310 eine erste Strahlungsquelle 331 und eine zweite Strahlungsquelle 332 auf. Diese sind im Prüfraum 330 so positioniert, dass bezogen auf die Lastrichtung die erste Strahlungsquelle 331 oberhalb der Probeaufnahme 360 angeordnet ist und die zweite Strahlungsquelle 332 unterhalb der Probeaufnahme 360 angeordnet ist.

Im beweglichen Gehäuseteil 322 ist die erste Strahlungsquelle 331 befestigt sowie eine Absaugvorrichtung 370 integriert, womit dieses im Wesentlichen dem beweglichen Gehäuseteil 22 von Figur 1 entspricht. Das bewegliche Gehäuseteil 322 wird aber nicht wie in Figur 1 über ein Scharnier mit dem feststehenden Gehäuseteil 321 verbunden, sondern ist mittels Führungsrollen 318 und Führungsschienen 319 im feststehenden Gehäuseteil 321 linear verschiebbar geführt. An Stelle des Belüftungskanals 27 verfügt der Prüfraum 330 über einen Anschluss 315, der über einen flexiblen Schlauch 316 mit einem Druckbehälter 317 oder einer Hausanlage verbunden ist. In diesem Druckbehälter 317 ist ein gasförmiges Medium gespeichert, welches vorzugsweise mittels einer Aufbereitungsvorrichtung 314 aufbereitet, beim einströmen in den Prüfraum einen definierten, gleich bleibenden Feuchtigkeitsgehalt aufweist. Da das gasförmige Medium unter Überdruck in den Prüfraum 330 einströmt, kann die Absaugvorrichtung 370 auch durch Abzugsöffnungen ersetzt werden. Die Durchströmgeschwindigkeit im Prüfraum 330 ergibt sich dann aus dem Volumenstrom des einströmenden gasförmigen Mediums bei Nenndruck im Prüfraum 330 und nicht durch die Saugleistung einer Absaugvorrichtung 370.

Die vorgestellten Ausführungsformen zeigen Messgeräte zur gravimetrischen Feuchtigkeitsbestimmung mit unterschiedlichen Eigenschaften und Merkmalen. Die verschiedenen Eigenschaften und Merkmale wurden zur besseren Übersicht in verschiedenen Ausführungsbeispielen dargestellt, wobei es auch möglich ist, einzelne, mehrere oder alle aufgezeigten Merkmale und Eigenschaften in einem Messgerät zu realisieren.

### Bezugszeichenliste

- 310, 210, 110, 10: Messvorrichtung
- 11: Strahlungsquelle
- 220,20: Gehäuse
- 321, 221, 21: feststehendes Gehäuseteil
- 322, 222, 22: bewegbares Gehäuseteil
- 124, 24: Durchführung
- 127,27: Belüftungskanal
- 128,28: Wand
- 29: Scharnier
- 330, 230, 130, 30: Prüfraum
- 340, 240, 40: Wägevorrichtung
- 43: Wägezelle
- 44: Kalibrierauflegemechanismus
- 45: Elektronikmodul
- 46: feststehender Bereich
- 47: Lastaufnahmebereich
- 48: Kalibriergewichtauflage
- 49: Kalibriergewicht
- 50: Anschlag
- 51: Übertragungsmittel
- 353, 53: Verbindungsglied
- 360, 260, 60: Probeaufnahme
- 61: Probeschale
- 262, 62: Probe
- 370, 270, 70: Absaugvorrichtung
- 90: lonisator
- 118: Hohlraum
- 119: Innenwindschutz
- 138: Belüftungskanal- Strahlungsquelle
- 271, 171: Filter
- 225: Beschickungsöffnung
- 331, 231: erste Strahlungsquelle
- 332, 232: zweite Strahlungsquelle
- 239: Schwenkachse
- 273: flexibler Schlauch
- 280: Öffnung
- 223: Belüftungsöffnung
- 314: Aufbereitungsvorrichtung
- 315: Anschluss
- 316: flexibler Schlauch
- 317: Druckbehälter
- 318: Führungsrolle
- 319: Führungsschiene

## Patentansprüche

1. Messgerät (10, 110, 210...) zur gravimetrischen Feuchtigkeitsbestimmung mit einem Gehäuse (20), einem im Gehäuse (20) angeordneten Prüfraum (30) und einer im Gehäuse (20) eingebauten Wägevorrichtung (40), wobei die Wägevorrichtung (40) eine Probeaufnahme (60) aufweist, welche in Messstellung innerhalb des Prüfraumes (30) angeordnet ist, sowie mit einer im Prüfraum (30) angeordneten Strahlungsquelle (11) zur Erwärmung einer auf der Probeaufnahme (60) aufgelegten Probe (62) während eines Messvorganges, **dadurch gekennzeichnet, dass** an den Prüfraum (30) anschliessend eine Absaugvorrichtung (70) angeordnet ist, mittels welcher die während des Messvorganges aus der Probe (62) austretende Feuchtigkeit und/oder flüchtigen Substanzen aus dem Prüfraum (30) entfernbar sind, und die Wägevorrichtung (40) und der Prüfraum (130) nebeneinander im Gehäuse angeordnet sind, wobei mindestens eine, vorzugsweise der Wägevorrichtung (40) zugewandte Wand (128) des Prüfraumes (130) mindestens eine Durchführung (124) aufweist, durch die ein Verbindungsglied (53) hindurchreicht, mit welchem die Wägevorrichtung (40) mit der im Prüfraum (130) angeordneten Probeaufnahme (60) verbindbar ist.

2. Messgerät (10, 110, 210...) nach Anspruch 1, **dadurch gekennzeichnet, dass** die Absaugvorrichtung (70) bezogen auf die Lastrichtung vorzugsweise oberhalb der Strahlungsquelle (11) angeordnet ist.

3. Messgerät (10, 110, 210...) nach einem der Ansprüche 1 oder 2, **dadurch gekennzeichnet**, die Strahlungsquelle (11) im Prüfraum (30) in Bezug auf die Lastrichtung oberhalb der Probeaufnahme (60) angeordnet ist.

4. Messgerät (10, 110, 210...) nach einem der Ansprüche 1 bis 3, **dadurch gekennzeichnet, dass** die Strahlungsquelle eine erste Strahlungsquelle (231) und eine zweite Strahlungsquelle (232) beinhaltet, wobei die Probeaufnahme zwischen der ersten Strahlungsquelle (231) und der zweiten Strahlungsquelle (232) angeordnet ist.

5. Messgerät (10, 110, 210...) nach einem der Ansprüche 1 bis 4, **dadurch gekennzeichnet, dass** die Strahlungsquelle (231) mit Öffnungen (280) zur Durchführung von Gasen versehen ist.

6. Messgerät (10, 110, 210...) nach einem der Ansprüche 1 bis 5, **dadurch gekennzeichnet, dass** die Kalibriervorrichtung (44, 46, 48, 49) ein oder mehrere Kalibriergewichte (49) aufweist, wobei der Massenschwerpunkt des einen oder der mehreren Kalibriergewichte (49) während eines Kalibrierungsvorganges auf oder nahe einer, in Lastrichtung verlaufenden Schwerpunktachse der Probeaufnahme (60) und/oder der Probe (62) liegt.

7. Messgerät (10, 110, 210...) nach einem der Ansprüche 1 bis 6, **dadurch gekennzeichnet, dass** die Wägevorrichtung (110) eine Wägezelle (43) beinhaltet die einen Lastaufnahmebereich (47) aufweist, wobei die Probeaufnahme (60) mit dem Lastaufnahmebereich (47) koppelbar, beziehungsweise vom Lastaufnahmebereich (47) entkoppelbar ist.

8. Messgerät (110) nach einem der Ansprüche 1 bis 7, **dadurch gekennzeichnet, dass** die Probeaufnahme (60) von einem im Prüfraum (130) angeordneten Innenwindschutz (119) teilweise umgeben ist.

9. Messgerät (10, 110, 210...) nach einem der Ansprüche 1 bis 8, **dadurch gekennzeichnet, dass** der Prüfraum (130) innerhalb des Gehäuses durch eine Wand (128) ausgebildet ist, wobei die Wand (128) zumindest zwischen dem Prüfraum (130) und der Wägevorrichtung (40) doppelwandig ausgestaltet ist.

10. Messgerät (10, 110, 210...) nach Anspruch 9, **dadurch gekennzeichnet, dass** ein gasförmiges Medium, vorzugsweise Luft, in der doppelwandigen Wand (128) geführt ist.

11. Messgerät (10, 110, 210...) nach Anspruch 9 oder 10, **dadurch gekennzeichnet, dass** im Prüfraum (30) oder in der doppelwandigen Wand (128) ein Mittel zur Eliminierung statischer Ladungen im Prüfraum (30), vorzugsweise ein lonisator (90) angeordnet ist.

12. Messgerät (10, 110, 210...) nach einem der Ansprüche 10 bis 11, **dadurch gekennzeichnet, dass** das gasförmige Medium chemisch stabil und/oder reaktionsträge gegenüber der Probe (62) und den Materialien des Prüfraums (30) ist.

13. Messgerät (10, 110, 210...) nach einem der Ansprüche 10 bis 12, **dadurch gekennzeichnet, dass** das gasförmige Medium einen bekannten Feuchtigkeitsgehalt aufweist.

14. Messgerät (10, 110, 210...) nach einem der Ansprüche 1 bis 13, **dadurch gekennzeichnet, dass** die Absaugvorrichtung (70) einen Kondensator und/oder Filter (171) aufweist.

15. Messgerät (10, 110, 210...) nach Anspruch 14, **dadurch gekennzeichnet, dass** der Filter (171) und/oder Kondensator ein Adsorptionsmittel aufweist.

16. Verfahren zur Feuchtigkeitsbestimmung einer Probe (62) mit einem Messgerät (10, 110, 210...) nach einem der Ansprüche 1 bis 15, **dadurch gekennzeichnet dass** das Verfahren im Wesentlichen die folgenden Schritte aufweist:
• einstellen des Prüfraumes (30) auf eine vorgegebene Temperatur mittels mindestens einer der Strahlungsquellen (11) und/oder der Absaugvorrichtung (70),
• einbringen der Probe (62) in den Prüfraum (30),
• ermitteln des Probengewichts in vordefinierten Messintervallen und/oder kontinuierliches Erfassen einer Gewichtsabnahme über die gesamte Prüfdauer,
• Auswertung des Messergebnisses und/oder Übermittlung des Messergebnisses an eine Anzeigeeinheit.

17. Verfahren zur Bestimmung der Feuchtigkeitsaffinität einer Probe (62) durch Messung der Gewichtszunahme während einer vorbestimmten Prüfdauer und einem festgelegten Temperaturprofil, mit einem Messgerät (10, 110, 210...) nach einem der Ansprüche 1 bis 15, **dadurch gekennzeichnet dass** das Verfahren im Wesentlichen die folgenden Schritte aufweist:
• einbringen der Probe (62) in den Prüfraum (30),
• konditionieren der Probe (62) auf eine vorbestimmte Feuchtigkeit,
• einstellen des Prüfraumes (30) auf eine vorgegebene Temperatur mittels mindestens einer der Strahlungsquellen (11) und/oder der Absaugvorrichtung (70),
• einbringen eines gasförmigen Mediums mit einem bekannten Feuchtigkeitsgehalt bei vordefiniertem Volumenstrom und vordefiniertem Temperaturprofil während der Prüfdauer,
• ermitteln des Probengewichts in vordefinierten Messintervallen und/oder kontinuierliches Erfassen einer Gewichtszunahme über die gesamte Prüfdauer,
• Auswertung des Messergebnisses und/oder Übermittlung des Messergebnisses an eine Anzeigeeinheit.

18. Verfahren nach Anspruch 16 oder 17, **dadurch gekennzeichnet, dass** die Erfassung des Probengewichtes in vordefinierten Messintervallen während der Prüfdauer erfolgt, wobei vor jedem Messintervall die Absaugvorrichtung (70) ausgeschaltet und nach jedem Messintervall die Absaugvorrichtung (70) wieder eingeschaltet wird.

19. Verfahren zur Korrektur eines Auftriebsfehlers in den nach einem der Verfahren der Ansprüche 16 oder 17 erfassten Messwerten, **gekennzeichnet durch** die folgenden Schritte:
• einbringen eines Referenzkörpers (61) in den Prüfraum (30),
• konditionieren des Prüfraumes (30) auf eine vorgegebene Temperatur mittels mindestens einer der Strahlungsquellen (11) und/oder der Absaugvorrichtung (70),
• ermitteln des Gewichtsgrundwertes des Referenzkörpers (61),
• einschalten der Absaugvorrichtung (70),
• ermitteln der Korrekturgewichtswerte des Referenzkörpers (61) in vorbestimmten Messintervallen und/oder kontinuierliches Erfassen der Gewichtsveränderung über die gesamte Prüfdauer,
• bilden der Korrekturwerte oder des Korrekturprofils über die ganze Prüfdauer **durch** Subtraktion des Gewichtsgrundwertes von den Korrekturgewichtswerten,
• einspeichern dieser Werte oder des Korrekturprofils in ein Speichermodul,
• Entnahme des Referenzkörpers (61),
• durchführen der Probenmessungen unter Berücksichtigung der ermittelten Korrekturwerte.

20. Verfahren zur Korrektur eines Auftriebsfehlers in den nach einem der Verfahren der Ansprüche 16 oder 17 erfassten Messwerten, **gekennzeichnet durch** die folgenden Schritte:
• ermitteln des Volumenstroms oder Massenstromes des gasförmigen Mediums mittels der Absaugvorrichtung (70) und/oder mindestens eines im Prüfraum (30) angeordneten Sensors,
• errechnen der Korrekturwerte oder des Korrekturprofils über die ganze Prüfdauer aus dem ermittelten Volumenstrom oder Massenstrom,
• einspeichern dieser Werte oder des Korrekturprofils in ein Speichermodul,
• durchführen der Probenmessungen unter Berücksichtigung der ermittelten Korrekturwerte.

21. Verfahren zur Verifizierung der in einem der Verfahren nach Anspruch 16 oder 17 erfassten Messwerte, **gekennzeichnet durch** die folgenden Schritte:
• ermitteln des Volumenstroms des gasförmigen Mediums mittels der Absaugvorrichtung (70) und/oder mittels mindestens einem im Prüfraum (30) angeordneten Sensor über die gesamte Prüfdauer,
• ermitteln und erfassen der konstant gehaltenen oder sich verändernden Feuchtigkeit des in den Prüfraum (30) einströmenden gasförmigen Mediums mit mindestens einem Feuchtesensor über die gesamte Prüfdauer,
• ermitteln und erfassen der sich verändernden Feuchtigkeit des aus dem Prüfraum (30) ausströmenden gasförmigen Mediums mit mindestens einem Feuchtesensor über die gesamte Prüfdauer,
• errechnen der Verifizierungswerte aus dem ermittelten Volumenstrom sowie der Feuchtigkeitsdifferenz zwischen dem einströmenden und dem ausströmenden gasförmigen Medium über die gesamte Prüfdauer.

## Claims

1. Measuring instrument (10, 110, 210, ...) for the gravimetric determination of moisture content, comprising a housing (20), a test compartment (30) arranged inside the housing (20), and a weighing device (40) installed in the housing (20), wherein the weighing device (40) has a sample receiver (60) which, when set in position to perform a measurement, is disposed inside the test compartment (30), said measuring instrument (10, 110, 210, ...) further comprising a radiation source (11) arranged in the test compartment (30) and serving to heat a sample (62) placed on the sample receiver (60) during a measuring process, **characterized in that** adjacent to the test compartment (30) there is a suction device (70) arranged, which serves to remove from the test compartment (30) the moisture and/or volatile substances coming out of the sample (62) during the measuring process and **in that** the weighing device (40) and the test compartment (130) are arranged side-by-side in the housing, wherein at least one wall of the test compartment (130), preferably a wall (128) that faces towards the weighing device (40), has at least one passage opening (124) through which a connecting member (53) reaches which connects the weighing device (40) to the sample receiver (60) that is arranged in the test compartment (130).

2. Measuring instrument (10, 110, 210, ...) according to claim 1, **characterized in that** the suction device (70) is arranged in relation to the load direction preferably above the radiation source (11).

3. Measuring instrument (10, 110, 210, ...) according to one of the claims 1 or 2, **characterized in that** the radiation source (11) is arranged in the test compartment (30) in relation to the load direction preferably above the sample receiver (60).

4. Measuring instrument (10, 110, 210, ...) according to one of the claims 1 to 3, **characterized in that** the radiation source comprises a first radiation source (231) and a second radiation source (232), wherein the sample receiver is arranged between the first radiation source (231) and the second radiation source (232).

5. Measuring instrument (10, 110, 210, ...) according to one of the claims 1 to 4, **characterized in that** the radiation source (231) has openings (280) that allow gases to pass through.

6. Measuring instrument (10, 110, 210, ...) according to one of the claims 1 to 5, **characterized in that** the weighing device (40) is equipped with a calibration device (48, 49, 50) and **in that** the calibration device (44, 46, 48, 49) includes one or more calibration weights (49), and that the center of mass of the one or more calibration weights (49) during a calibration process lies on an axis that is oriented in the direction of the load and passes through the center of gravity of the sample receiver (60) and/or of the sample (62).

7. Measuring instrument (10, 110, 210, ...) according to one of the claims 1 to 6, **characterized in that** the weighing device (110) comprises a weighing cell (43) which has a load-receiving portion (47), wherein the sample receiver (60) is configured so that it can be coupled to as well as uncoupled from the load-receiving portion (47).

8. Measuring instrument (10, 110, 210, ...) according to one of the claims 1 to 7, **characterized in that** the sample receiver (60) is partially surrounded by an interior draft shield (119) which is arranged in the test compartment (130).

9. Measuring instrument (10, 110, 210, ...) according to one of the claims 1 to 8, **characterized in that** the test compartment (130) is formed within the housing by a wall (128), wherein said wall (128) is preferably configured as a double wall at least between the test compartment (130) and the weighing device (40).

10. Measuring instrument (10, 110, 210, ...) according to claim 9, **characterized in that** a gaseous medium, preferably air, is conducted inside the double wall (128).

11. Measuring instrument (10, 110, 210, ...) according to claim 9 or 10, **characterized in that** a means for eliminating electrostatic charges from the test compartment (30) , preferably an ionizer, is arranged in the test compartment (30) or in the double wall.

12. Measuring instrument (10, 110, 210, ...) according to claim 10 or 11, **characterized in that** the gaseous medium is chemically stable and/or chemically inert relative to the sample (62) and the materials of the test compartment (30).

13. Measuring instrument (10, 110, 210, ...) according to claim 10 to 12, **characterized in that** the gaseous medium has a known moisture content.

14. Measuring instrument (10, 110, 210, ...) according to one of the claims 1 to 13, **characterized in that** the suction device (70) comprises a condenser and/or a filter (171).

15. Measuring instrument (10, 110, 210, ...) according to claim 14, **characterized in that** the filter (171) and/or condenser comprises an adsorption agent.

16. Method for determining the moisture content of a sample (62) with a measuring instrument (10, 110, 210, ...) according to one of the claims 1 to 15, **characterized in that** the method comprises substantially the following steps:
- setting the test compartment (30) to a prescribed temperature by means of at least one of the radiation sources (11) and or the suction device (70),
- placing the sample (62) in the test compartment (30),
- determining the sample weight in predetermined time intervals, and/or continuously determining a weight loss over the entire duration of the test,
- evaluating the measurement result and/or transmitting the measurement result to an indicating unit.

17. Method for determining the affinity to moisture in a sample (62) by measuring the weight increase in a test of a predetermined duration and with a defined temperature profile, using a measuring instrument (10, 110, 210, ...) according to one of the claims 1 to 15, **characterized in that** the method comprises substantially the following steps:
- placing the sample (62) in the test compartment (30),
- conditioning the sample (62) to a predetermined moisture content,
- setting the test compartment (30) to a prescribed temperature by means of at least one of the radiation sources (11) and/or the suction device (70),
- injecting a gaseous medium with a known moisture content into the test compartment (30), at a predefined volume flow rate and a predefined temperature profile over the duration of the test,
- determining the sample weight at predetermined measurement intervals and/or continuously determining the weight gain over the entire duration of the test,
- evaluating the measurement result and/or transmitting the measurement result to an indicator unit.

18. Method according to claim 16 or 17, **characterized in that** the determination of the sample weight occurs at predefined measuring intervals over the duration of the test, wherein prior to each measuring interval the suction device (70) is switched off and after each measuring interval the suction device (70) is switched on again.

19. Method for correcting an error due to buoyancy in the measurement values determined according to the methods of claim 16 or claim 17, **characterized by** the following steps:
- placing a reference object (61) into the test compartment (30),
- conditioning the test compartment (30) to a prespecified temperature by means of one of the radiation sources (11) and/or the suction device (70),
- determining the base weight value for the reference object (61),
- switching the suction device (70) on,
- determining the correction weight values for the reference object (61) in predetermined measurement intervals and/or continuously measuring the weight change over the entire test duration,
- calculating the correction values or the correction profile over the entire test duration by subtracting the base weight value from the correction weight values,
- storing the correction values or the correction profile in a memory module,
- removing the reference object (61) from the test compartment,
- performing the measurements on the sample, taking into account the correction values determined in the preceding steps.

20. Method for correcting an error due to buoyancy in the measurement values determined according to the methods of claim 16 or claim 17, **characterized by** the following steps:
- determining the volume flow rate or the mass flow rate of the gaseous medium by means of the suction device (70) and/or by means of at least one sensor (30) that is arranged in the test compartment,
- calculating the correction values or the correction profile over the entire test duration based on the results found for the volume flow rate or mass flow rate,
- storing the correction values or the correction profile in a memory module,
- performing the measurements on the sample, taking into account the correction values determined in the preceding steps.

21. Method for verifying the results found through one of the methods according to claim 16 or 17, comprising the following steps:
- determining over the entire test duration the volume flow rate of the gaseous medium by means of the suction device (70) and/or by means of at least one sensor that is arranged in the test compartment (30),
- by means of at least one humidity sensor, determining and registering over the entire test duration the humidity of the gaseous medium flowing into the test compartment (30), with said humidity either being kept constant or being allowed to vary,
- by means of at least one humidity sensor, determining and registering over the entire test duration the humidity of the gaseous medium flowing out of the test compartment (30),
- calculating the verification values from the volume flow as determined above in this method as well as from the humidity difference between the incoming stream and the outgoing stream of the gaseous medium over the entire duration of the test.

## Revendications

1. Instrument de mesure (10, 110, 210...) pour la détermination gravimétrique de l'humidité, avec un boîtier (20), une chambre de contrôle (30) agencée dans le boîtier (20) et un dispositif de pesage (40) encastré dans le boîtier (20), dans lequel le dispositif de pesage (40) comporte un récepteur d'échantillons (60) agencé à l'intérieur de la chambre de contrôle (30) dans une position de mesure, ainsi qu'avec une source de rayonnement (11) agencée dans la chambre de contrôle (30) pour le réchauffement d'un échantillon (62) disposé sur le récepteur d'échantillons (60) pendant une opération de mesurage, **caractérisé en ce que** la chambre de contrôle (30) est suivie d'un dispositif d'aspiration (70) au moyen duquel l'humidité sortant de l'échantillon (62) pendant l'opération de mesurage et/ou des substances volatiles peuvent être évacués de la chambre de contrôle (30), et **en ce que** le dispositif de pesage (40) et la chambre de contrôle (130) sont agencés côte à côte dans le boîtier, dans lequel au moins une paroi (128) de la chambre de contrôle (130) tournée de préférence vers le dispositif de pesage (40) comporte au moins un passage (124) traversé par un organe de liaison (53) permettant de relier le dispositif de pesage (40) au récepteur d'échantillons (60) agencé dans la chambre de contrôle (30).

2. Instrument de mesure (10, 110, 210...) selon la revendication 1, **caractérisé en ce que** le dispositif d'aspiration (70) est agencé de préférence au-dessus de la source de rayonnement (11) par rapport à la direction de charge.

3. Instrument de mesure (10, 110, 210...) selon l'une des revendications 1 ou 2, **caractérisé en ce que** la source de rayonnement (11) est agencée au-dessus du récepteur d'échantillons (60) dans la chambre de contrôle (30), par rapport à la direction de charge.

4. Instrument de mesure (10, 110, 210...) selon l'une des revendications 1 à 3, **caractérisé en ce que** la source de rayonnement contient une première source de rayonnement (231) et une deuxième source de rayonnement (232), dans lequel le récepteur d'échantillons est agencé entre la première source de rayonnement (231) et la deuxième source de rayonnement (232).

5. Instrument de mesure (10, 110, 210...) selon l'une des revendications 1 à 4, **caractérisé en ce que** la source de rayonnement (231) est pourvue d'ouvertures (280) pour le passage de gaz.

6. Instrument de mesure (10, 110, 210...) selon l'une des revendications 1 à 5, **caractérisé en ce que** le dispositif de calibrage (44, 46, 48, 49) comporte un ou plusieurs poids de calibrage (49), le centre de gravité de l'un ou des plusieurs poids de calibrage (49) se trouvant sur ou à proximité d'un axe de gravité du récepteur d'échantillons (60) et/ou de l'échantillon (62) pendant une opération de calibrage.

7. Instrument de mesure (10, 110, 210...) selon l'une des revendications 1 à 6, **caractérisé en ce que** le dispositif de pesage (40) contient une cellule de pesage (43) comportant une région de réception de charge (47), dans lequel le récepteur d'échantillons (60) peut être accouplé avec la région de réception de charge (47), ou désaccouplé de la région de réception de charge (47).

8. Instrument de mesure (110) selon l'une des revendications 1 à 7, **caractérisé en ce que** le récepteur d'échantillons (60) est partiellement entouré d'une protection intérieure contre le vent (119) agencée dans la chambre de contrôle (130).

9. Instrument de mesure (10, 110, 210...) selon l'une des revendications 1 à 8, **caractérisé en ce qu'**à l'intérieur du boîtier, la chambre de contrôle (130) est formée par une paroi (128), la paroi (128) étant conçue comme une double paroi, au moins entre la chambre de contrôle (130) et le dispositif de pesage (40).

10. Instrument de mesure (10, 110, 210...) selon la revendication 9, **caractérisé en ce qu'**un milieu gazeux, de préférence de l'air, est guidé dans la double paroi (128).

11. Instrument de mesure (10, 110, 210...) selon la revendication 9 ou 10, **caractérisé en ce qu'**un moyen pour l'élimination de charges statiques dans la chambre de contrôle (30) est agencé dans la chambre de contrôle (30) ou dans la double paroi (128), de préférence un ionisateur (90).

12. Instrument de mesure (10, 110, 210...) selon l'une des revendications 10 à 11, **caractérisé en ce que** le milieu gazeux est chimiquement stable et/ou inerte par rapport à l'échantillon (62) et aux matériaux de la chambre de contrôle (30).

13. Instrument de mesure (10, 110, 210...) selon l'une des revendications 10 à 12, **caractérisé en ce que** le milieu gazeux présente un taux d'humidité connu.

14. Instrument de mesure (10, 110, 210...) selon l'une des revendications 1 à 13, **caractérisé en ce que** le dispositif d'aspiration (70) comporte un condensateur et/ou un filtre (171).

15. Instrument de mesure (10, 110, 210...) selon la revendication 14, **caractérisé en ce que** le filtre (171) et/ou le condensateur comporte un moyen d'absorption.

16. Procédé pour la détermination de l'humidité dans un échantillon (62), avec un instrument de mesure (10, 110, 210...) selon l'une des revendications 1 à 15, **caractérisé en ce que** le procédé comporte essentiellement les étapes suivantes :
• réglage de la chambre de contrôle (30) à une température prédéfinie au moyen d'au moins l'une des sources de rayonnement (11) et/ou du dispositif d'aspiration (70),
• introduction de l'échantillon (62) dans la chambre de contrôle (30),
• détermination du poids de l'échantillon selon des intervalles de mesure prédéfinis et/ou détection continue d'une perte de poids sur l'ensemble de la durée de contrôle,
• évaluation du résultat de mesure et/ou transfert du résultat de mesure à une unité d'affichage.

17. Procédé pour la détermination de l'affinité de l'humidité d'un échantillon (62), en mesurant la hausse de poids sur une durée de contrôle prédéterminée et avec un profil de température prédéfini, avec un instrument de mesure (10, 110, 210...) selon l'une des revendications 1 à 15, **caractérisé en ce que** le procédé comporte essentiellement les étapes suivantes :
• introduction de l'échantillon (62) dans la chambre de contrôle (30) ;
• conditionnement de l'échantillon (62) à une humidité prédéterminée,
• réglage de la chambre de contrôle (30) à une température prédéfinie, au moyen d'au moins l'une des sources de rayonnement (11) et/ou du dispositif d'aspiration (70) ;
• introduction d'un milieu gazeux avec un taux d'humidité connu, avec un flux volumique prédéfini et un profil de profil de température prédéfini sur la durée de contrôle,
• détermination du poids de l'échantillon selon des intervalles de mesure prédéfinis et/ou détection continue d'une hausse de poids sur l'ensemble de la durée de contrôle,
• évaluation du résultat de mesure et/ou transfert du résultat de mesure à une unité d'affichage.

18. Procédé selon la revendication 16 ou 17, **caractérisé en ce que** la détection du poids de l'échantillon (62) selon des intervalles de mesure prédéfinis est réalisée pendant la durée de contrôle, le dispositif d'aspiration (70) étant éteint avant chaque intervalle de mesure, et le dispositif d'aspiration (70) étant rallumé après chaque intervalle de mesure

19. Procédé pour la correction d'une erreur de poussée dans les valeurs de mesure détectées à l'aide du procédé selon l'une des revendications 16 ou 17, **caractérisé par** les étapes suivantes :
• introduction d'un corps de référence (61) dans la chambre de contrôle (30),
• conditionnement de la chambre de contrôle (30) à une température prédéfinie, au moyen d'au moins l'une des sources de rayonnement (11) et/ou du dispositif d'aspiration (70),
• détermination de la valeur de base du poids du corps de référence (61),
• allumage du dispositif d'aspiration (70),
• détermination des valeurs de poids de correction du corps de référence (61) selon des intervalles de mesure prédéterminés et/ou détection continue du changement de poids sur l'ensemble de la durée de contrôle,
• formation des valeurs de correction ou du profil de correction sur l'ensemble de la durée de contrôle, par soustraction de la valeur de base du poids aux valeurs de poids de correction,
• enregistrement de ces valeurs ou du profil de correction dans un module de mémoire,
• retrait du corps de référence (61),
• exécution des mesures d'échantillon en tenant compte des valeurs de correction déterminées.

20. Procédé pour la correction d'une erreur de poussée dans les valeurs de mesure détectées à l'aide du procédé selon la revendication 16 ou 17, **caractérisé par** les étapes suivantes :
• détermination du flux volumique ou du débit massique du milieu gazeux au moyen du dispositif d'aspiration (70) et/ou d'au moins un capteur agencé dans la chambre de contrôle (30),
• calcul des valeurs de correction ou du profil de correction sur l'ensemble de la durée de contrôle, à partir du flux volumique ou du débit massique déterminé,
• enregistrement de ces valeurs ou du profil de correction dans un module de mémoire.
• exécution des mesures d'échantillon en tenant compte des valeurs de correction déterminées.

21. Procédé pour la vérification des valeurs de mesure détectées à l'aide d'un procédé selon la revendication 16 ou 17, **caractérisé par** les étapes suivantes :
• détermination du flux volumique du milieu gazeux au moyen du dispositif d'aspiration (70) et/ou au moyen d'au moins un capteur agencé dans la chambre de contrôle (30), sur l'ensemble de la durée de contrôle,
• détermination et détection de l'humidité maintenue constante et changeante du milieu gazeux affluant dans la chambre de contrôle (30), à l'aide d'au moins un capteur d'humidité, sur l'ensemble de la durée de contrôle,
• détermination et détection de l'humidité changeante du milieu gazeux sortant de la chambre de contrôle (30), à l'aide d'au moins un capteur d'humidité, sur l'ensemble de la durée de contrôle,
• calcul des valeurs de vérification à partir du flux volumique déterminé, ainsi que de la différence d'humidité entre le milieu gazeux affluant et le milieu gazeux sortant, sur l'ensemble de la durée de contrôle.
